(19) Europäisches Patentamt
European Patent Office
Office européen des brevets

(11) **EP 1 398 361 B1**

(12) **EUROPEAN PATENT SPECIFICATION**

(45) Date of publication and mention
of the grant of the patent:
**28.05.2008 Bulletin 2008/22**

(51) Int Cl.:
*C09J 7/00* (2006.01)     *C09J 7/02* (2006.01)

(21) Application number: **03020623.9**

(22) Date of filing: **10.09.2003**

(54) **Double-sided pressure-sensitive adhesive tape and adhesion method**

Beidseitiges druckempflindliches Klebeband und Klebeverfahren

Ruban adhésif sensible à la pression double face et methode d'adhésion

(84) Designated Contracting States:
**AT BE BG CH CY CZ DE DK EE ES FI FR GB GR HU IE IT LI LU MC NL PT RO SE SI SK TR**

(30) Priority: **10.09.2002 JP 2002264127**

(43) Date of publication of application:
**17.03.2004 Bulletin 2004/12**

(73) Proprietor: **NITTO DENKO CORPORATION Osaka (JP)**

(72) Inventors:
• **Nonaka, Akiko**
**Ibaraki-shi**
**Osaka (JP)**
• **Yagura, Kazuyuki**
**Ibaraki-shi**
**Osaka (JP)**
• **Ando, Masahiko**
**Ibaraki-shi**
**Osaka (JP)**
• **Tatsumi, Motoshige**
**Ibaraki-shi**
**Osaka (JP)**

(74) Representative: **Grünecker, Kinkeldey, Stockmair & Schwanhäusser Anwaltssozietät Leopoldstrasse 4 80802 München (DE)**

(56) References cited:
**EP-A- 0 308 216          EP-A- 0 614 959
EP-A- 1 035 161          EP-B- 0 506 372
EP-B- 0 519 086          GB-A- 1 466 005
US-A1- 2002 012 762**

Remarks:
The file contains technical information submitted after the application was filed and not included in this specification

**Description**

The present invention relates to a double-sided pressure-sensitive adhesive tape and an adhesion method using the double-sided pressure-sensitive adhesive tape. The double-sided pressure-sensitive adhesive tape of the invention can be used in various fields where a double-sided pressure-sensitive adhesive tape is used. For example, it is useful for fixation of small-sized parts having a complicated shape, such as display sections and nameplates of portable electronic instruments such as PDA and portable telephones.

Double-sided pressure-sensitive adhesive tapes can be subjected to punching processing into an arbitrary shape prior to lamination on articles and have good workability, and therefore, they are utilized for fixation of articles in various industrial fields. In particular, since in display sections and nameplates of portable electronic instruments such as PDA and portable telephones, parts are small-sized and have a complicated shape, bonding by a double-sided pressure-sensitive adhesive tape is frequently used for fixation of such small-sized parts (for example, as described in Japanese Patent Laid-Open Nos. 2001-323227 and 2002-188061).

There may be the case where portable electronic instruments drop from a desk in view of their use mode. In such a case, the portable electronic instruments are required to have durability such that no breakage takes place. However, according to double-sided pressure-sensitive adhesive tapes that have hitherto been used for fixation of small-sized articles such as portable electronic instruments, there is the possibility that the small-sized articles fall out during dropping, so that such conventional double-sided pressure-sensitive adhesive tapes cannot be satisfied with respect to durability. For improving such durability, it may be considered to increase contact areas of double-sided pressure-sensitive adhesive tapes. However, there was involved a problem such that a large contact area cannot be secured due to restrictions in design and function of portable electronic instruments.

In addition, in recent years, there is a tendency that portable electronic instruments are coated with a water repellent or oil repellent coating material (such as silicone component-containing coating materials) for design properties and antifouling properties. Since conventional double-sided pressure-sensitive adhesive tapes are hardly adhered to the coating surface coated with such a coating material, it is demanded to realize double-sided pressure-sensitive adhesive tapes capable of being adhered to such coating surface.

EP-A-0 308 216 discloses a double-sided pressure-sensitive adhesive tape comprising a flexible support with at least one side thereof coated with a low surface energy, pressure-sensitive adhesive. The other side of the flexible support may be coated with a high surface energy pressure-sensitive adhesive. The low surface energy adhesive may further comprise fillers, plasticizers and oils.

US-A-2002/012762 discloses a thermally conductive interface, which may be in the form of a double-sided, pressure-sensitive adhesive tape. The interface includes a first pressure-sensitive adhesive surface, which is preferably silicon based, and a second pressure-sensitive adhesive surface. A filler may be contained in the silicone-based pressure-sensitive adhesive in an amount of between 0 and 10% by weight. Suitable fillers are thermally conductive fillers, such as boron nitride, aluminum oxide, aluminum nitride, titanium diboride, magnesium oxide, zinc oxide, silicon carbide, beryllium oxide, antimony oxide, and mixtures thereof.

EP-A-0 519 086 relates to a double-sided pressure-sensitive adhesive tape comprising a substrate, a first layer of an acrylic or rubber-based pressure-sensitive adhesive composition and a silicon polymer, and a second pressure-sensitive adhesive layer comprising an acrylic or rubber-based pressure-sensitive adhesive.

EP-A-1 035 161 relates to a silicon composition for preparing a silicon pressure-sensitive adhesive, which comprises a polydiorganosiloxane and a silica filler.

EP-A-0 614 959 discloses a method for making a substantially solventless heat curable organopolysiloxane composition, comprising a organic solvent dispersion of an organosiloxane hydrolyzate comprising triorganosiloxy units chemically combined with tetrasiloxy units, which has been spray dried to produce a finely divided resin particulate, and is directly dispersed into a pressure-sensitive adhesive network mixture. The network mixture comprises a substantially linear alkenyl siloxane, a substantially linear silicon hydride siloxane and an amount of a hydrosilylation catalyst. The heat curable organopolysiloxane may be utilized as a pressure-sensitive adhesive, and may further comprise a filler.

GB-A-1 466 005 discloses an article comprising a unitary coherent backing, an organopolysiloxane pressure-sensitive adhesive layer on at least one face of said backing, and a releasable anti-stick layer.

EP-A-0 506 372 discloses an organopolysiloxane composition suitable for forming a pressure-sensitive adhesive composition, the organopolysiloxane composition comprising a resinous silicon copolymer, an alkenyl-terminated polydiorganosiloxane, an organohydrogenpolysiloxane, a catalytic amount of a hydrosilytion catalyst and an organic solvent. Small amounts of additional ingredients may be added, such as fillers.

The invention is aimed to provide a double-sided pressure-sensitive adhesive tape having excellent impact resistance such that even in the case where an impact is applied by dropping, etc. to a body in which small-sized parts are fixed by a double-sided pressure-sensitive adhesive tape, the small-sized parts do not fall out. Further, the invention is aimed to provide a double-sided pressure-sensitive adhesive tape having excellent impact resistance even in the case where a body is water repellent or oil repellent.

Specifically, the invention relates to a double-sided pressure-sensitive adhesive tape comprising a pressure-sensitive adhesive layer on the both sides of a substrate, wherein the pressure-sensitive adhesive layer on at least one side is a silicone based pressure-sensitive adhesive layer containing a polydiorganosiloxane, and an organic filler is added to the silicone based pressure-sensitive adhesive layer.

According to the foregoing double-sided pressure-sensitive adhesive tape of the invention, by adding a filler to silicone based pressure-sensitive adhesive containing a polydiorganosiloxane, impact resistance is enhanced, and fallout of parts due to an impact during dropping of a body is hardly generated. The addition amount of the filler is preferably from 0.5 to 40 parts by weight, and more preferably from 1 to 10 parts by weight based on 100 parts by weight (solids content) of the silicone based pressure-sensitive adhesive. When the addition amount of the filler is less than 0.5 parts by weight, an effect of impact resistance during dropping tends to be insufficient, whereas when it exceeds 40 parts by weight, the pressure-sensitive adhesion characteristic tends to be lowered.

In addition to the impact resistance, the silicone based pressure-sensitive adhesive layer exhibits good adhesion properties against water repellent or oil repellent, antifouling coating surfaces having poor adhesion properties. Further, the silicone based pressure-sensitive adhesive layer exhibits good adhesion properties against UV cured coating surfaces.

In the double-sided pressure-sensitive adhesive tape, crosslinked silicone rubber fine particles are preferable as the filler. While various kinds can be used as the filler, crosslinked silicone rubber fine particles have good impact resistance and are suitable.

In the double-sided pressure-sensitive adhesive tape, polydiorganosiloxanes containing a phenyl group in the molecule thereof are suitable as the polydiorganosiloxane.

In general, a release liner is temporarily adhered to the pressure-sensitive adhesive layer of the pressure-sensitive adhesive tape up to the time of use. Accordingly, the pressure-sensitive adhesive tape is required to have light releasability from the release liner. The silicone based pressure-sensitive adhesive layer using a polydiorganosiloxane containing a phenyl group in the molecule thereof can keep light releasability even in the case where a silicone based release liner usually used as a release liner, especially an admiringly employed dimethylsilicone based release liner is used.

In the double-sided pressure-sensitive adhesive tape, it is preferable that the pressure-sensitive adhesive layer on one side of the substrate is the foregoing silicone based pressure-sensitive adhesive layer, whereas the pressure-sensitive adhesive layer formed on the other side is an acrylic pressure-sensitive adhesive layer.

As the pressure-sensitive adhesive that forms the pressure-sensitive adhesive layer on the other side of the double-sided pressure-sensitive adhesive tape, various pressure-sensitive adhesives can be used depending on an adherend. Acrylic pressure-sensitive adhesives are particularly suitably used from the standpoints of cost, durability, pressure-sensitive adhesion characteristic, etc.

In the double-sided pressure-sensitive adhesive tape, it is preferable that the silicone based pressure-sensitive adhesive layer has an adhesive force against a UV cured coating surface (obtained from an acrylic UV curable coating material having a silicone oil content of 0.2 % by weight) of 6 N/20 mm or more, and more preferably 8 N/20 mm at 23 °C. The silicone based pressure-sensitive adhesive layer of the double-sided pressure-sensitive adhesive tape of the invention also exhibits good adhesion properties against UV cured coating surfaces having poor adhesion properties. When the adhesive force is too high, releasability to the release liner tends to be lowered. Accordingly, the adhesive force is preferably not higher than 50 N/20 mm, and more preferably not higher than 30 N/20 mm. Incidentally, the details of the measurement of the adhesive force are described in the Examples.

Also, the invention relates to an adhesion method of adhering a part to a UV cured coating surface with a double-sided pressure-sensitive adhesive tape, the method comprising using the foregoing double-sided pressure-sensitive adhesive tape as the double-sided pressure-sensitive adhesive tape, adhering the silicone based pressure-sensitive adhesive layer side of the double-sided pressure-sensitive adhesive tape to the UV cured coating surface, and adhering the article to the other pressure-sensitive adhesive layer side.

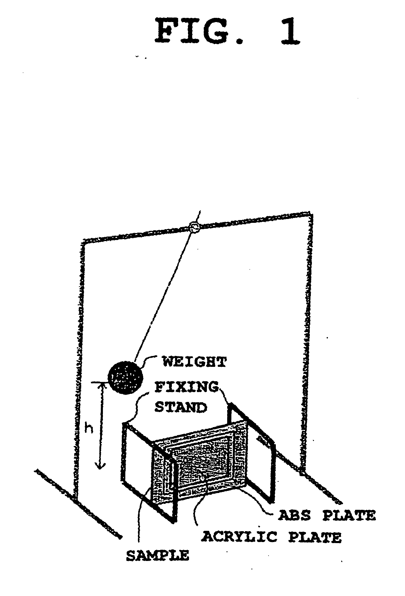

Fig. 1 is a conceptual drawing of the pendulum impact tester used for impact resistance test of the double-sided tapes.

The double-sided pressure-sensitive adhesive tape of the invention has a silicone based pressure-sensitive adhesive layer on at least one side of a substrate. The double-sided pressure-sensitive adhesive tape can be used in a sheet form.

The substrate is not particularly limited but properly selected depending upon utility for which the double-sided pressure-sensitive adhesive tape is used. Examples of substrates include film substrates such as polyethylene terephthalate, polybutylene terephthalate, polyethylene naphthalate, polyethylene, and polypropylene; non-woven fabrics made of Manila hemp, rayon, polyesters, pulp fibers, etc.; papers; and expanded bodies. Above all, films and non-woven fabrics are suitably used from the standpoints of strength, processability, and dimensional stability. The thickness of the substrate is not particularly limited but is usually from approximately 10 to 150 $\mu$m.

As the silicone based pressure-sensitive adhesive that forms the silicone based pressure-sensitive adhesive layer, various silicone rubbers containing a polydiorganosiloxane as a constitutional component can be used without particular limitations. As the organic group of the polydiorganosiloxane, are enumerated hydrocarbon groups such as alkyl groups, aryl groups, and alkenyl groups. Examples of alkyl groups include a methyl group, an ethyl group, and a propyl group, with a methyl group being preferable on the points of pressure-sensitive adhesion characteristic, durability, etc. Examples of aryl groups include a phenyl group. In the case where an addition reaction is used as the crosslinking method of silicone based pressure-sensitive adhesives, it is preferable to copolymerize an alkenyl group. Examples of alkenyl groups include a vinyl group, an allyl group, a butenyl group, and a hexenyl group. Above all, a vinyl group is suitably used. Also, various functional groups such as a hydroxyl group may be introduced. Especially, ones having a hydroxyl group on the both terminal ends thereof can suitably be used. Examples of the polydiorganosiloxane include polydimethylsiloxane, polydiphenylsiloxane, and copolymers or mixtures thereof.

Of these polydiorganosiloxanes are suitable polydiorganosiloxanes containing a phenyl group in the molecule thereof. The content of the phenyl group is not particularly limited, but its proportion to organic groups bonded to a silicon atom contained in the polydiorganosiloxane (a proportion of the number of phenyl groups to the whole of organic groups) is preferably from approximately 5 to 20 %, and more preferably from 7 to 18 %. When the content of the phenyl group against the organic groups bonded to a silicon atom is less than 5 %, releasability from the release liner is poor, whereas when it exceeds 20 %, impact resistance during dropping of a body is liable to become poor.

The degree of polymerization of the polydiorganosiloxane is not particularly limited but in general, is preferably from 500 to 10,000, and more preferably from 2,000 to 8,000. Such polydiorganosiloxanes can be used singly or in admixture of two or more thereof.

The polydiorganosiloxane is properly compounded with various silicone resins that are used in silicone based pressure-sensitive adhesives. The silicone based pressure-sensitive adhesives are used as partial condensates or mixtures of the foregoing silicone rubber and a silicone resin. The silicone resin is a branched polyorganosiloxane containing a hydroxyl group bonded to a silicon atom in the molecule thereof and can be subjected to partial condensation reaction with the foregoing silicone rubber by means of the hydroxyl group. For example, polyorganosiloxanes comprising a copolymer containing at least one unit selected from an M unit ($R_3SiO_{1/2}$), a Q unit ($SiO_2$), a T unit ($RSiO_{3/2}$), and a D unit ($R_2SiO$) (wherein R represents a monovalent hydrocarbon group or a hydroxyl group) can preferably be used. Examples of monovalent hydrocarbon groups include alkyl groups such as a methyl group, an ethyl group, and a propyl group, alkenyl groups such as a vinyl group, and aryl groups such as a phenyl group.

The polyorganosiloxane comprising the foregoing copolymer contains a hydroxyl group and may further be introduced with various functional groups such as a vinyl group, as the need arises. The functional group to be introduced may be ones that cause crosslinking reaction. As the copolymer, MQ resins comprising an M unit and a Q unit are preferable.

The ratio (molar ratio) of the M unit to the Q unit, T unit or D unit is not particularly limited but the former:the later is preferably from approximately 0.3:1 to 1.5:1, and more preferably from 0.5:1 to 1.3:1. These silicone resins can be used singly or in admixture of two or more thereof.

The compounding proportion (weight ratio) of the silicone rubber and the silicone resin is not particularly limited. But, the compounding amount of the silicon resin is from 60 to 250 parts by weight, and more preferably from 80 to 200 parts by weight based on 100 parts by weight of the silicone rubber. The silicone rubber and the silicone resin may be merely compounded and used or may be a partial condensate thereof. When the amount of the branched polyorganosiloxane is less than 60 parts by weight, liner releasability is lowered, whereas when it exceeds 250 parts by weight, impact resistance during dropping is liable to be lowered.

The silicone based pressure-sensitive adhesive may be of a crosslinked structure. As a crosslinking agent, peroxide based crosslinking agents and SiH group-containing siloxane based crosslinking agents are suitable. The peroxide based crosslinking agents are concerned with crosslinking of a radical reaction type, and the siloxane based crosslinking agents are concerned with crosslinking of an addition reaction type using hydrosilylation reaction between an alkenyl group such as a vinyl group and a polyorganohydrogensiloxane. In the case of siloxane based crosslinking agents, vinyl group-containing polyorganosiloxanes are used as the silicon rubber and the like.

As the peroxide crosslinking agents, various peroxide crosslinking agents that have hitherto been used in silicone based pressure-sensitive adhesives can be used without particular limitations. Examples include benzoyl peroxide, t-butylperoxybenzoate, dicumyl peroxide, t-butylcumyl peroxide, t-butyl oxide, 2,5-dimethyl-2,5-di-t-butylperoxyhexane, 2,4-dichloro-benzoyl peroxide, di-t-butylperoxy-di-isopropylbenzene, 1,1-bis(t-butylperoxy)-3,3,5-trimethyl-cyclohexane, and 2,5-dimethyl-2,5-di-t-butylperoxyhexyne-3. The amount of the peroxide based crosslinking agent to be used is usually from approximately 0.15 to 2 parts by weight, and preferably from 0.5 to 1.4 parts by weight based on 100 parts by weight of the silicone rubber.

Further, as the siloxane based crosslinking agents, polyorganohydrogensiloxanes having at least two hydrogen atoms bonded to a silicon atom in average in the molecule thereof are used. Examples of organic groups bonded to a silicon atom include alkyl groups, a phenyl group, and halogenated alkyl groups, with a methyl group being preferable

4

from the standpoint of easiness of synthesis and handling. The siloxane skeleton structure may be any of linear, branched or cyclic, and a linear structure is well used.

The siloxane based crosslinking agent to be used is compounded in an amount such that the number of hydrogen atoms bonded to a silicon atom is usually from 1 to 30, and preferably 4 to 17 per vinyl group in the silicone rubber and silicone resin. When the number of hydrogen atoms bonded to a silicon atom is less than 1, a sufficient cohesive force is not obtained, whereas when it exceeds 30, adhesion characteristics tend to be lowered. In the case where the siloxane based crosslinking agent is used, platinum catalysts are usually used, but various other catalysts can also be used. Incidentally, in the case where the siloxane based crosslinking agent is used, vinyl group-containing polyorganosiloxanes are used as the silicone rubber, and the content of the vinyl group is preferably from approximately 0.0001 to 0.01 mole/100 g.

As the filler, any organic fillers can be used so far as they are insoluble in solvents of the silicone based pressure-sensitive adhesive, such as toluene and xylene. Examples of organic fillers include crosslinked natural rubber fine particles, crosslinked isoprene rubber fine particles, crosslinked silicone rubber fine particles, cellulose powders, and cork powders. Of these fillers, crosslinked silicone rubber fine particles are suitably used. The crosslinked silicone rubber fine particles are produced by finely dispersing a silicone oil in water (to form an emulsion), crosslinking and curing the oil dispersed in water by hydroxylation to form rubbery particles, and then removing water. As such crosslinked silicone rubber fine particles, for example, a commercially available product, "Torayfil" manufactured by Dow Corning Toray Silicone Co., Ltd. can be used. The shape of the filler is not particularly limited, and various shapes including acicular, spherical and hollow shapes can be used, with a spherical shape being suitably used. The size of the filler is not limited but is suitably smaller than the thickness of the silicone based pressure-sensitive adhesive layer. It is usually from 0.1 $\mu$m to 100 $\mu$m, and preferably from 0.5 $\mu$m to 10 $\mu$m. As described previously, the addition amount of the filler is from 0.5 to 40 parts by weight based on 100 parts by weight of the silicone based pressure-sensitive adhesive.

Incidentally, besides the foregoing blend, various additives can be added to the silicone based pressure-sensitive adhesive composition of the invention, as the need arises.

The formation of the silicone based pressure-sensitive adhesive layer is usually carried out by coating a solution of the foregoing blend in a solvent such as toluene on the substrate and then heating and crosslinking the blend. Further, there may be enumerated a method in which the silicone based pressure-sensitive adhesive layer is provided on the release liner and then transferred. The heating temperature is not particularly limited but properly determined while taking into consideration the kind of the crosslinking agent, etc. Incidentally, in forming the silicone based pressure-sensitive adhesive layer on the substrate, an undercoating agent can be used for enhancing anchoring properties between the substrate and the silicone based pressure-sensitive adhesive layer. The thickness of the silicone based pressure-sensitive adhesive layer is not particularly limited but is from approximately 10 to 100 $\mu$m.

Examples of the release liner include papers, synthetic resin films such as polyethylene, polypropylene, and polyethylene terephthalate, rubber sheets, cloths, non-woven fabrics, nets, expanded sheets, metallic foils, and laminates thereof. For enhancing releasability from the pressure-sensitive adhesive layer, the surface of the release liner may be subjected to release processing such as silicone processing, long chain alkyl processing, and fluorine based processing, as the need arises.

As the pressure-sensitive adhesive that forms the pressure-sensitive adhesive layer on the other side of the double-sided pressure-sensitive adhesive tape of the invention, various pressure-sensitive adhesives can be used depending on an adherend. Besides silicone based pressure-sensitive adhesives including those described above, various pressure-sensitive adhesives such as acrylic pressure-sensitive adhesives and rubber based pressure-sensitive adhesives can be enumerated as the pressure-sensitive adhesive. Acrylic pressure-sensitive adhesives are particularly suitably used from the standpoints of cost, durability, pressure-sensitive adhesion characteristic, etc.

As the acrylic pressure-sensitive adhesives, are enumerated ones comprising as a base polymer a polymer or copolymer of a (meth)acrylic acid alkyl ester containing an alkyl group having from 4 to 12 carbon atoms as a major component. Examples of the (meth) acrylic acid alkyl ester include butyl (meth)acrylate, isobutyl (meth) acrylate, hexyl (meth)acrylate, 2-ethylhexyl (meth)acrylate, isononyl (meth)acrylate, and isodecyl (meth)acrylate.

In addition to the foregoing major component, the base polymer can be copolymerized with comonomer components such as (meth)acrylic acid alkyl esters containing an alkyl group having from 1 to 3 carbon atoms, acrylic acid, methacrylic acid, vinyl acetate, acrylonitrile, methacrylonitrile, and styrene, as the need arises. Further, other pressure-sensitive adhesives can be compounded with various additives. For the acrylic based pressure-sensitive adhesives, can be added tackiness imparting resins such as petroleum resins, terpene resins, rosin resins, coumaroneindene resins, and phenol resins; and crosslinking agents such as isocyanate based crosslinking agents and epoxy based crosslinking agents. In addition, various additives such as stabilizers and fillers may properly be compounded.

The formation method of other pressure-sensitive adhesive layer is not particularly limited but includes a method of coating the pressure-sensitive adhesive (solution) on the substrate and then drying it and a method of transferring the pressure-sensitive adhesive layer by a pressure-sensitive adhesive layer-provided release liner. The thickness of other pressure-sensitive adhesive layer (dry film thickness) is not particularly limited but is preferably from approximately

10 to 100 μm.

The double-sided pressure-sensitive adhesive tape of the invention can be utilized in various fields and is useful for fixing a part onto the UV cured coating surface. Especially, it is useful for fixing a part onto the UV cured coating surface processed by adding a water repellent or oil repellent material to a UV curing type resin and subjecting the UV cured coating surface to surface treatment. The silicon based pressure-sensitive adhesive layer side of the double-sided pressure-sensitive adhesive tape is adhered onto the UV cured coating surface, and a part is adhered to the other pressure-sensitive adhesive layer side. For imparting a surface hardness onto the surface of each of bodies, the UV cured coating surface is formed by coating a UV curing type resin and then curing it. Examples of UV curing type resins include polyester based, acrylic, urethane based, amide based, silicone based, and epoxy based resins, and UV curing type monomers, oligomers and polymers are included. As the UV curing type resins, are enumerated ones containing a UV polymerizable functional group, especially ones containing an acrylic monomer or oligomer containing two or more, and particularly from 3 to 6 UV polymerizable functional groups. Further, the UV curing type resin is compounded with a UV polymerization initiator.

The invention will be made clear with reference to the following Examples and Comparative Examples. Incidentally, parts in each of the Examples are parts by weight.

## REFERENTIAL EXAMPLE 1

2,2'-Azobis-isobutyronitrile (0.2 part) as a polymerization initiator was added to a blend of n-butyl acrylate, vinyl acetate, acrylic acid, and 2-hydroxyethyl acrylate in a weight ratio of 92.5/4.6/2.8/0.1 was added, and the blend was polymerized in toluene to obtain an acrylic copolymer solution having a weight average molecular weight of 500,000. To this copolymer solution, 15 parts of a rosin phenol based resin, 25 parts of a rosin based resin, and 2 parts of an isocyanate based crosslinking agent based on 100 parts of the solids content of the copolymer were added and mixed to prepare an acrylic pressure-sensitive adhesive composition (solution). This pressure-sensitive adhesive composition was coated on a release liner having been subjected to release processing with polydimethylsiloxane in a dry thickness of 50 μm and dried at a temperature of 100 °C for 3 minutes to prepare a pressure-sensitive adhesive tape having an acrylic pressure-sensitive adhesive layer.

## EXAMPLE 1

Polydimethylsiloxane (100 parts) having a degree of polymerization of 4,000, in which organic groups bonded to a silicon atom consisted of 15 % of a phenyl group, 84.5 % of a methyl group, and 0.5 % of a vinyl group, and containing a hydroxyl group on the both terminal ends thereof and 80 parts of a hydroxyl group-containing branched polymethylsiloxane having a constitutional ratio of the Q unit ($SiO_2$) to the M unit (($CH_3$)$_3$$SiO_{1/2}$) of 1/0.8 by mole were subjected to partial condensation in toluene in the presence of sodium hydroxide. Next, the condensate was neutralized with phosphoric acid to obtain a toluene solution of a silicone based pressure-sensitive adhesion. Polymethylhydrogensiloxane in an amount of 0.5 parts based on 100 parts of the solids content of the silicone based pressure-sensitive adhesive and a platinum-vinylsiloxane complex were added to obtain a pressure-sensitive adhesive solution. To this pressure-sensitive adhesive solution was added crosslinked silicone rubber fine particles ("Torayfil E-600" manufactured by Dow Corning Toray Silicone Co., Ltd.) having a mean particle size of 2 μm in an amount of 2 parts based on 100 parts of the solids content of the pressure-sensitive adhesive, and the mixture was stirred to obtain a pressure-sensitive adhesive solution.

This pressure-sensitive adhesive solution was coated on one side of a polyethylene terephthalate film having a thickness of 38 μm in a dry thickness of 30 μm and dried at a temperature of 120 °C for 3 minutes to form a silicone based pressure-sensitive adhesive layer. A release liner having been subjected to release processing with polydimethylsiloxane was laminated on the silicone based pressure-sensitive adhesive layer to obtain a single-sided pressure-sensitive adhesive tape. The pressure-sensitive adhesive tape prepared in Referential Example 1 was laminated on the polyethylene terephthalate film side of the single-sided pressure-sensitive adhesive tape to prepare a double-sided pressure-sensitive adhesive tape.

## EXAMPLE 2

A double-sided pressure-sensitive adhesive tape having the same addition reaction type silicone based pressure-sensitive adhesive layer (thickness: 30 μm) as in Example 1 provided on the both sides of a polyethylene terephthalate film having a thickness of 38 μm was prepared.

## COMPARATIVE EXAMPLE 1

A pressure-sensitive adhesion solution was obtained in the same manner as in Example 1, except that no crosslinked silicone rubber fine particles were added in Example 1. Using this pressure-sensitive adhesive solution, a double-sided pressure-sensitive adhesive tape was prepared in the same manner as in Example 1.

## COMPARATIVE EXAMPLE 2

The pressure-sensitive adhesive tape prepared in Referential Example 1 was laminated on the both sides of a 38 μm-thick polyethylene terephthalate film to prepare a double-sided pressure-sensitive adhesive tape.
The respective double-sided pressure-sensitive adhesive tapes of the foregoing Examples 1 to 2 and Comparative Examples 1 to 2 were evaluated for initial adhesive force, impact resistance, release force, and holding power in the following manners. The results are shown in Table 1.

[Adhesive force]

An acrylic plate and an ABS plate having been subjected to acrylic UV cured coating (addition amount of silicone oil: 0.2 %) were used as adherends. A pressure-sensitive adhesive tape (20 mm × 100 mm) having a 38 μm-thick polyethylene terephthalate film laminated thereon was laminated on the non-evaluation surface of the double-sided pressure-sensitive adhesive tape using a roller of 200 g. Twenty minutes after lamination at an atmospheric temperature of 23 °C, a 180° release adhesive force was measured under a condition of a release rate of 300 mm/min using a universal tensile tester. The measurement was made according to JIS Z0237.

[Impact resistance]

A UV coating surface of an ABS plate having been subjected to acrylic UV cured coating (addition amount of silicone oil: 0.2 %) and an acrylic plate of 2 mm × 60 mm × 40 mm were laminated using a double-sided pressure-sensitive adhesive tape of 256 mm$^2$ to prepare a sample. The double-sided pressure-sensitive adhesive tape was laminated such that the UV coating surface was the silicone based pressure-sensitive adhesive layer. Incidentally, in the Comparative Examples, no silicone based pressure-sensitive adhesive was used, and therefore, the UV coating surface was also laminated with an acrylic pressure-sensitive adhesive. The sample was measured for an impact resistance energy (J) using a pendulum impact tester as shown in Fig. 1. The sample was set in a fixing stand such that a weight (m: 0.2 kg) hit on the ABS plate side. A weight-provided pendulum was swung downward and hit on the sample from each height. An impact resistance energy E (J) was measured according to the following equation from a maximum height h (m) at which the acrylic plate did not fall out.

$$\textbf{[Impact resistance energy (J): E]} = \textbf{[m: weight (kg)]} \times \textbf{[gravity (g)]} \times \textbf{[h: height (m)]} = 0.2 \times 9.8 \times h$$

[Release force]

The release force of the double-sided pressure-sensitive adhesive tape (50 mm × 100 mm) was measured under conditions of an atmospheric temperature of 23 °C, a release rate of 300 mm/min, and a release angle of 180° using a universal tensile tester.

[Measurement of holding power]

The double-sided pressure-sensitive adhesive tape was cut into a width of 10 mm and laminated on a bakelite plate at a contact area of 10 mm × 20 mm. A load of 500 g was applied in the vertical direction at an atmospheric pressure of 80 °C, and a time until causing dropping was measured.

Table 1

| | | Adhesive force (N/20 mm) | | Impact resistance energy (J) | Release force (N/50 mm) | Holding power (min) |
|---|---|---|---|---|---|---|
| | | UV coating surface | Acrylic plate | | | |
| Example 1 | Silicone based pressure-sensitive adhesive layer | 10 | - | 0.30 | 0.2 | > 120 |
| | Acrylic based pressure-sensitive adhesive layer | - | 14 | | 0.1 | > 120 |
| Example 2 | Silicone based pressure-sensitive adhesive layer | 10 | 10 | 0.30 | 0.2 | > 120 |
| Comparative Example 1 | Silicone based pressure-sensitive adhesive layer | 11 | - | 0.15 | 0.3 | > 120 |
| | Acrylic based pressure-sensitive adhesive layer | - | 14 | | 0.1 | > 120 |
| Comparative Example 2 | Acrylic based pressure-sensitive adhesive layer | 8 | 14 | 0.05 | 0.1 | > 120 |

As is clear from the results of the foregoing Table 1, it is noted that any of the double-sided pressure-sensitive adhesive tapes of the Examples of the invention have good adhesive force and impact resistance and are excellent in releasability.

## Claims

1.  A double-sided pressure-sensitive adhesive tape comprising a pressure-sensitive adhesive layer on the both sides of a substrate, wherein the pressure-sensitive adhesive layer on at least one side is a silicone based pressure-sensitive adhesive layer containing a polydiorganosiloxane, and an organic filler is added to the silicone based pressure-sensitive adhesive layer.

2.  The double-sided pressure-sensitive adhesive tape according to claim 1, wherein the filler is crosslinked silicone rubber fine particles.

3.  The double-sided pressure-sensitive adhesive tape according to claim 1, wherein the polydiorganosiloxane is a polydiorganosiloxane containing a phenyl group in the molecule thereof.

**4.** The double-sided pressure-sensitive adhesive tape according to claim 1, wherein the pressure-sensitive adhesive layer on one side of the substrate is the silicone based pressure-sensitive adhesive layer, and the pressure-sensitive adhesive layer formed on the other side is an acrylic pressure-sensitive adhesive layer.

**5.** The double-sided pressure-sensitive adhesive tape according to claim 1, wherein the silicone based pressure-sensitive adhesive layer has an adhesive force against a UV cured coating surface of 6 N/20 mm or more at 23 °C, said UV cured coating surface being obtained from an acrylic UV curable coating material having a silicone oil content of 0.2 % by weight.

**6.** An adhesion method of adhering a part to a UV cured coating surface with a double-sided pressure-sensitive adhesive tape, the method comprising using the double-sided pressure-sensitive adhesive tape according to claim 1 as the double-sided pressure-sensitive adhesive tape, adhering the silicone based pressure-sensitive adhesive layer side of the double-sided pressure-sensitive adhesive tape to the UV cured coating surface, and adhering the part to the other pressure-sensitive adhesive layer side.

**7.** The double-sided pressure-sensitive adhesive tape according to claim 2, wherein the addition amount of the filler is from 0.5 to 40 parts by weight, based on 100 parts by weight of the silicone based pressure-sensitive adhesive.

**8.** The double-sided pressure-sensitive adhesive tape according to claim 7, wherein the addition amount of the filler is from 1 to 10 parts by weight, based on 100 parts by weight of the silicone based pressure-sensitive adhesive.

**9.** The double-sided pressure-sensitive adhesive tape according to claim 5, wherein the silicone based pressure-sensitive adhesive layer has an adhesive force against a UV cured coating surface of 8 N/20 mm or more at 23 °C.


**Patentansprüche**

**1.** Doppelseitiges, druckempfindliches Klebstoffband, umfassend eine druckempfindliche Klebstoffschicht auf den beiden Seiten eines Substrats, worin die druckempfindliche Klebstoffschicht auf wenigstens einer Seite eine druckempfindliche Klebstoffschicht auf Siliconbasis ist, die ein Polydiorganosiloxan enthält, und ein organischer Füllstoff zu der druckempfindlichen Klebstoffschicht auf Siliconbasis zugesetzt wird.

**2.** Doppelseitiges, druckempfindliches Klebstoffband gemäß Anspruch 1, worin der Füllstoff feine Teilchen aus vernetztem Siliconkautschuk ist.

**3.** Doppelseitiges, druckempfindliches Klebstoffband gemäß Anspruch 1, worin das Polydiorganosiloxan ein Polydiorganosiloxan ist, das eine Phenylgruppe in seinem Molekül enthält.

**4.** Doppelseitiges, druckempfindliches Klebstoffband gemäß Anspruch 1, worin die druckempfindliche Klebstoffschicht auf einer Seite des Substrats die druckempfindliche Klebstoffschicht auf Siliconbasis ist, und die auf der anderen Seite gebildete druckempfindliche Klebstoffschicht eine druckempfindliche Acryl-Klebstoffschicht ist.

**5.** Doppelseitiges, druckempfindliches Klebstoffband gemäß Anspruch 1, worin die druckempfindliche Klebstoffschicht auf Siliconbasis eine Klebekraft gegen eine UV-gehärtete Beschichtungsoberfläche von 6 N/20 mm oder mehr bei 23 °C hat, wobei die UV-gehärtete Beschichtungsoberfläche aus einem UV-härtbaren Acryl-Beschichtungsmaterial mit einem Siliconölgehalt von 0,2 Gew.-% erhalten ist.

**6.** Klebeverfahren zum Ankleben eines Teils an eine UV-gehärtete Beschichtungsoberfläche mit einem doppelseitigen, druckempfindlichen Klebstoffband, wobei das Verfahren umfasst die Verwendung des doppelseitigen druckempfindlichen Klebstoffbandes gemäß Anspruch 1 als das doppelseitige druckempfindliche Klebstoffband, das Ankleben der druckempfindlichen Klebstoffschichtseite auf Siliconbasis des doppelseitigen, druckempfindlichen Klebstoffbandes an die UV-gehärtete Beschichtungsoberfläche und das Ankleben des Teils an die andere druckempfindliche Klebstoffschichtseite.

**7.** Doppelseitiges, druckempfindliches Klebstoffband gemäß Anspruch 2, worin die Zugabemenge des Füllstoffs 0,5 bis 40 Gewichtsteile, bezogen auf 100 Gewichtsteile des druckempfindlichen Klebstoffs auf Siliconbasis, beträgt.

8. Doppelseitiges, druckempfindliches Klebstoffband gemäß Anspruch 7, worin die Zugabemenge des Füllstoffs 1 bis 10 Gewichtsteile, bezogen auf 100 Gewichtsteile des druckempfindlichen Klebstoffs auf Siliconbasis, beträgt.

9. Doppelseitiges, druckempfindliches Klebstoffband gemäß Anspruch 5, worin die druckempfindliche Klebstoffschicht auf Siliconbasis eine Klebekraft gegen eine UV-gehärtete Beschichtungsoberfläche 8 N/20 mm oder mehr bei 23 °C hat.

**Revendications**

1. Ruban adhésif double face sensible à la pression qui comprend une couche adhésive sensible à la pression sur les deux côtés d'un substrat, dans lequel la couche adhésive sensible à la pression sur au moins un côté est une couche adhésive sensible à la pression à base de silicone qui contient un polydiorganosiloxane, et une charge organique est ajoutée à la couche adhésive sensible à la pression à base de silicone.

2. Ruban adhésif double face sensible à la pression selon la revendication 1, dans lequel la charge est constituée de particules fines de caoutchouc de silicone réticulé.

3. Ruban adhésif double face sensible à la pression selon la revendication 1, dans lequel le polydiorganosiloxane est un polydiorganosiloxane qui contient un groupe phényle dans sa molécule.

4. Ruban adhésif double face sensible à la pression selon la revendication 1, dans lequel la couche adhésive sensible à la pression sur un côté du substrat est la couche adhésive sensible à la pression à base de silicone et la couche adhésive sensible à la pression formée sur l'autre côté est une couche adhésive sensible à la pression en acrylique.

5. Ruban adhésif double face sensible à la pression selon la revendication 1, dans lequel la couche adhésive sensible à la pression à base de silicone présente une force adhésive sur une surface de revêtement durcie aux UV de 6 N/20 mm ou plus à 23°C, ladite surface de revêtement durcie aux UV étant obtenue à partir d'un matériau acrylique de revêtement durcissable aux UV qui présente une teneur en huile de silicone de 0,2 % en poids.

6. Procédé d'adhésion d'une pièce à une surface de revêtement durcie aux UV avec un ruban adhésif double face sensible à la pression, le procédé comprenant l'utilisation du ruban adhésif double face sensible à la pression selon la revendication 1 comme ruban adhésif double face sensible à la pression, qui fait adhérer le côté de la couche adhésive sensible à la pression à base de silicone du ruban adhésif double face sensible à la pression à la surface de revêtement durcie aux UV et qui fait adhérer la pièce à l'autre côté de la couche adhésive sensible à la pression.

7. Ruban adhésif double face sensible à la pression selon la revendication 2, dans lequel la quantité ajoutée de charge est comprise entre 0,5 et 40 parties en poids, sur base de 100 parties en poids d'adhésif sensible à la pression à base de silicone.

8. Ruban adhésif double face sensible à la pression selon la revendication 7, dans lequel l'addition d'une quantité de la charge est comprise entre 1 et 10 parties en poids, sur base de 100 parties en poids de l'adhésif sensible à la pression à base de silicone.

9. Ruban adhésif double face sensible à la pression selon la revendication 5, dans lequel la couche adhésive sensible à la pression à base de silicone présente une force adhésive sur une surface de revêtement durcie aux UV de 8 N/20 mm ou plus à 23°C.

# FIG. 1

WEIGHT

FIXING STAND

h

ABS PLATE

ACRYLIC PLATE

SAMPLE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001323227 A
- JP 2002188061 A
- EP 0308216 A
- US 2002012762 A
- EP 0519086 A
- EP 1035161 A
- EP 0614959 A
- GB 1466005 A
- EP 0506372 A